# FASCICULE DE BREVET EUROPEEN

(11) **EP 3 843 928 B1**
(45) Date de publication et mention de la délivrance du brevet: **16.08.2023**
(21) Numéro de dépôt: 19774149.9
(22) Date de dépôt: 28.08.2019
(51) Int. Cl.: B23H 3/04, B23H 9/10, F01D 5/06

(54) **OUTILLAGE POUR L'USINAGE DE FESTONS ET DE TROUS DE FIXATION D'UNE BRIDE DE DISQUE PAR PCEM ET PROCÉDÉ UTILISANT CET OUTILLAGE**
WERKZEUG ZUM BEARBEITEN VON GIRLANDEN UND BEFESTIGUNGSLÖCHERN EINES SCHEIBENFLANSCHES MITTELS PECM UND VERFAHREN MIT DIESEM WERKZEUG
TOOL FOR MACHINING FESTOONS AND ATTACHMENT HOLES OF A DISC FLANGE BY PECM AND METHOD USING THIS TOOL

(30) Priorité: 31.08.2018 FR 1857838
(43) Date de publication de la demande: 07.07.2021
(73) Titulaire: SAFRAN AIRCRAFT ENGINES, 75015 Paris (FR)
(72) Inventeur: LECOMTE, Janvier François, 77550 Moissy-Cramayel (FR); AUVRAY, Estelle Michèle Nicole, 77550 Moissy-Cramayel (FR); TALLON, Sophie Anne-Laure, 77550 Moissy-Cramayel (FR)
(74) Mandataire: Cabinet Beau de Loménie
(86) Numéro de dépôt international: PCT/FR2019/051982
(87) Numéro de publication internationale: WO 2020/043989

(56) Documents cités:
- FR-A1- 3 006 925
- KLOCKE FRITZ ET AL: "Turbomachinery component manufacture by application of electrochemical, electro-physical and photonic processes", CIRP ANNALS, ELSEVIER BV, NL, CH, FR, vol. 63, no. 2, 2 juillet 2014 (2014-07-02), pages 703-726, XP029041329, ISSN: 0007-8506, DOI: 10.1016/J.CIRP.2014.05.004

## Description

### ARRIERE-PLAN DE L'INVENTION

La présente invention concerne un outillage pour réaliser des brides de disques de turbine par usinage électrochimique et un procédé utilisant un tel outillage.

La réalisation de disques de turbine a longtemps été obtenue par brochage ou fraisage puis ébavurage et rayonnage des arêtes vives. Ainsi, plusieurs opérations d'usinage sont donc nécessaires pour une telle réalisation. De plus, la libération des contraintes dans le matériau pendant ces opérations engendrent des déformations qui imposent de créer des étapes d'usinage supplémentaires et des contrôles intermédiaires pour tenir les tolérances géométriques finales exigées pour un disque de turbine, ce qui a pour conséquence d'augmenter fortement le temps de cycle. Il existe aussi des risques de déformations induites par les contraintes résultant des efforts de coupes, notamment lors des phases de perçages des brides de disque de faibles épaisseurs.

Aussi, pour pallier ces inconvénients et en outre assurer une automatisation et une robustesse de l'ébavurage et du rayonnage des arêtes vives et permettre une suppression des opérations manuelles de finition, il est connu de recourir à l'usinage électrochimique et plus particulièrement à l'usinage électrochimique pulsé (PECM en anglais). Le document FR 3 006 925 décrit un dispositif selon le préambule de la revendication 1 et un procédé utilisant cette solution technique pour la réalisation d'alvéoles sur une pièce de turbine mono-étagée.

On connaît aussi avec le document FR 3 042 138, un outillage relativement simple et à coût modéré qui permet dans un temps relativement court l'usinage d'alvéoles de disques multi-étagé. Cet outillage qui donne globalement satisfaction n'est toutefois pas adapté à la réalisation des festons et des trous de fixation d'une bride de disque de turbine.

### OBJET ET RESUME DE L'INVENTION

Aussi, il existe aujourd'hui un besoin non satisfait de réaliser simultanément les festons et les trous de fixation d'une bride de disque de turbine par usinage électrochimique pulsé au moyen d'un outillage simple, et cela en un temps relativement court.

Un tel outillage présenterait en effet l'avantage d'une absence de contrainte mécanique du fait d'une oxydation anodique du matériau, d'un rayonnage naturel des arêtes et d'une absence de bavures générées par le procédé PECM comme d'usure de l'outil d'enfonçage (seul le renouvellement de l'électrolyte étant à effectuer).

Cet objectif est atteint grâce à un outillage pour réaliser des festons et trous de fixation d'une bride d'un disque par usinage électrochimique utilisant un électrolyte, l'outillage comprenant : un plateau support annulaire pour recevoir ledit disque ; des protecteurs inférieur et supérieur configurés pour protéger ledit disque de projections de l'électrolyte ; un verrou de bridage pour maintenir ledit disque en position durant l'usinage ; et un outil d'enfonçage comprenant dans un corps isolant sensiblement cylindrique des première et deuxième cathodes conductrices coaxiales, lesdites première et deuxième cathodes étant fixées de manière rigide l'une à l'autre, caractérisé en ce que la première cathode de forme annulaire comporte à une périphérie extérieure une pluralité de saillies radiales d'usinage de forme complémentaire à celle des festons à usiner et la deuxième cathode comporte, sur une même circonférence extérieure à ladite première cathode par rapport à l'axe central du disque, une pluralité de buses axiales d'usinage de forme semblable à celle des trous de fixation à usiner.

Par « fixées de manière rigide l'une à l'autre », on comprend que les première et deuxième cathodes sont fixées de sorte que, lorsque l'outil d'enfonçage se déplace, ces première et deuxième cathodes se déplacent simultanément et de manière identique. La forme des saillies radiales d'usinage, en vue axiale selon l'axe du disque, correspond à la forme des festons devant être réalisées sur la bride du disque et la forme et disposition sur une même circonférence des buses axiales d'usinage correspondent aux forme et disposition des trous de fixation devant être réalisés dans la bride. Par ailleurs, à quelques dixièmes de millimètres près correspondant à l'intervalle de travail (gap latéral) entre la pièce et l'outil, les rayons externes des saillies de la première cathode sont égaux aux rayons externes des festons de la bride, et le diamètre externe des buses de la deuxième cathode est égal au diamètre interne des trous de fixation de la bride. Par conséquent, lorsque l'outil d'enfonçage se déplace suivant l'axe du disque, la première cathode permet de réaliser les festons de la bride par usinage électrochimique, et la deuxième cathode permet de réaliser les trous de fixation de la bride par usinage électrochimique.

L'outillage permet d'usiner les trous et les festons de la bride du disque (ou vice et versa selon la position respective des première et deuxième cathodes selon l'axe du disque) par deux séquences d'usinage électrochimique successives réalisées au moyen de l'outil d'enfonçage unique défini précédemment.

Avantageusement, ladite pluralité de saillies radiales d'usinage présente à une extrémité terminale une partie travaillante d'une épaisseur e1 comprise entre 0,2 et 1 mm, et chacune desdites buses axiales d'usinage présente à une extrémité terminale une partie travaillante en forme de plaque conductrice cylindrique d'une épaisseur e2 comprise entre 0,2 et 1 mm, et en ce que, pour permettre la diffusion de l'électrolyte, chacune des saillies radiales d'usinage comporte un orifice terminal et la plaque conductrice comporte un orifice.

En cours d'usinage, suivant le procédé PECM, on injecte un électrolyte qui s'écoule le long des saillies ou au travers des buses; et simultanément, on fait circuler un courant électrique pulsé de la partie de disque à usiner à la cathode active correspondante ; le passage de ce courant permet une rupture ionique des atomes métalliques provoquant un enlèvement de matière à la partie de disque située en face de la cathode active, de sorte que les festons, respectivement les trous de fixation, de la bride présentent, après usinage, la forme définie par les saillies, respectivement les buses, de la cathode active.

De préférence, le corps isolant de l'outil d'enfonçage comporte en outre des passages d'injection de fluide pour injecter l'électrolyte au travers des saillies radiales d'usinage et des buses axiales d'usinage.

Avantageusement, les protecteurs inférieur et supérieur sont constitués chacun par une pièce conductrice rigide en contact direct avec une surface de la bride de disque à usiner et spécialement configurée pour assurer le passage des première et deuxième cathodes sans risques d'un contact avec celles-ci. Le protecteur inférieur est de préférence formé en plusieurs parties pour permettre son insertion sous la bride à usiner.

Selon un mode réalisation avantageux, pour permettre l'obtention de rayonnages en entrée des festons ainsi que des chanfreins en entrée des trous de fixation, un espacement axial compris entre 0,2 mm et 0,8 mm, et typiquement 0,5 mm, est prévu entre le protecteur supérieur et une face supérieure de la bride de disque.

De préférence, le verrou de bridage comporte une partie inférieure calibrée sur un diamètre intérieur d'un poireau d'équilibrage du disque de façon à assurer un centrage axial de ce disque, cette partie inférieure comportant une jante de bridage du disque avec le protecteur inférieur préalablement en position.

Avantageusement, deux joints d'étanchéité annulaires sont montés d'une part entre le protecteur supérieur et une bride de disque supérieure et d'autre part entre une partie supérieure du verrou de bridage et l'outil d'enfonçage et permettent d'assurer une étanchéité à l'électrolyte lors de l'enfonçage des premières et deuxièmes cathodes.

Le présent exposé concerne également un procédé de réalisation de festons et de trous de fixation d'une bride de disque par usinage électrochimique au moyen d'un outil d'enfonçage comprenant dans un corps isolant sensiblement cylindrique des première et deuxième cathodes coaxiales, le procédé comportant les étapes suivantes :
a) Positionner l'outil d'enfonçage de telle sorte que la première cathode soit au voisinage d'une surface supérieure de la bride de disque à usiner,
b) Usiner avec la première cathode les festons (ou les trous) de la bride de disque par usinage électrochimique en déplaçant l'outil d'enfonçage par rapport au disque selon l'axe central du corps isolant sensiblement cylindrique jusqu'à ce que la deuxième cathode de l'outil d'enfonçage soit positionnée au voisinage d'une surface supérieure de ladite bride de disque à usiner,
c) Usiner avec la deuxième cathode les trous (ou les festons) de la bride de disque par usinage électrochimique en déplaçant l'outil d'enfonçage par rapport au disque selon l'axe central du corps isolant sensiblement cylindrique.

De préférence, on protège les surfaces inférieure et supérieure de la bride de disque, autres que celles concernées par le procédé, par respectivement des protecteurs inférieur et supérieur constitués chacun par une pièce conductrice rigide en contact direct avec les surfaces à protéger et en un matériau de meilleure conductivité que le matériau de la bride de disque à usiner.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- les figures 1 et 1A représentent des vues en coupe et de détail d'une partie de disque de turbine,
- les figures 2A et 2B sont des représentations simplifiées d'un disque, respectivement avant usinage de sa dentelure alvéolée et après usinage de sa dentelure alvéolée,
- la figure 3 représente en vue éclatée l'outillage pour réaliser des festons et des trous d'une bride de disque de turbine,
- les figures 3A et 3B montrent des détails de l'outil de défonçage de la figure 3,
- la figure 4 représente une bride de disque avant usinage électrochimique,
- les figures 5A à 5C représentent trois positions successives de l'outil d'enfonçage par rapport à l'outillage lors de l'usinage électrochimique, et
- la figure 6 représente une bride de disque après usinage électrochimique.

### DESCRIPTION DETAILLEE D'EXEMPLES DE REALISATION

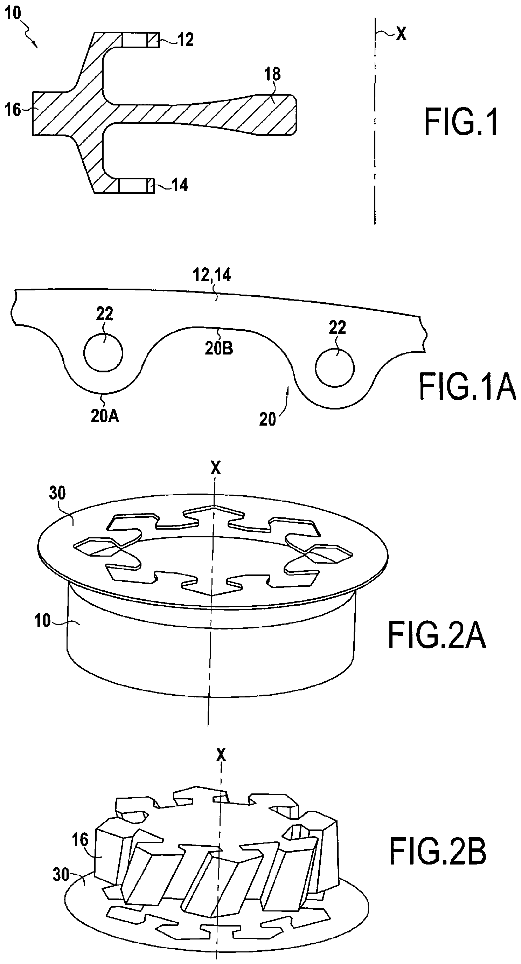

La figure 1 représente une vue en coupe d'un disque de turbine 10 d'axe central X après usinage, comportant une bride de disque supérieure 12 d'un premier diamètre, une bride de disque inférieure 14 d'un second diamètre pouvant être identique ou non au premier, les deux brides se rejoignant au niveau d'une dentelure annulaire 16 définissant les alvéoles du disque et se prolongeant vers l'axe central du disque par un poireau d'équilibrage 18. Comme le montre le détail de la figure 1A, chacune de ces deux brides présente à sa périphérie une pluralité de festons 20 formés d'une suite d'arcs saillants 20A et rentrants 20B, chacun des arcs saillants étant percés d'un trou de fixation 22.

Les figures 2A et 2B sont des représentations schématiques simplifiées d'un disque 10 avant usinage de sa dentelure alvéolée 16 (figure 2A), et après usinage de cette dentelure alvéolée (figure 2B), par le procédé connu sous l'appellation de méthode d'usinage électrochimique pulsé (ou PECM pour « Pulsed Electrical Chemical Machining »).

Le procédé PECM qui assure un usinage électrochimique avec une précision maximale de ±10 µm, utilise un courant pulsé dont la fréquence est comprise entre 10 et 120Hz associé à un mouvement oscillatoire sinusoïdal de 0,1 à 0,5 mm d'une cathode d'enfonçage 30. Cette cathode d'enfonçage, de forme complémentaire du disque à usiner, est parcouru par un courant pulsé, et un électrolyte sous pression circule entre cette cathode 30 et le disque 10 à usiner qui sont toujours distants d'un intervalle de travail minimum. Initialement, la cathode 30 est en position haute, c'est-à-dire au-dessus du disque 10 (figure 2A), et elle est ensuite translatée en direction du disque 10 selon l'axe de ce dernier, en adoptant, dans le cas de figure illustré, une trajectoire hélicoïdale par rapport à ce dernier. Lorsque la cathode parvient au niveau du disque, des impulsions de courant successives sont déclenchées dans l'électrolyte et une dissolution ionique se produit du fait de l'interaction anode-cathode. A l'issue de sa translation, la cathode 30 se trouve dans une position basse, c'est-à-dire au-dessous du disque 10 (figure 2B), qui marque la fin de l'usinage.

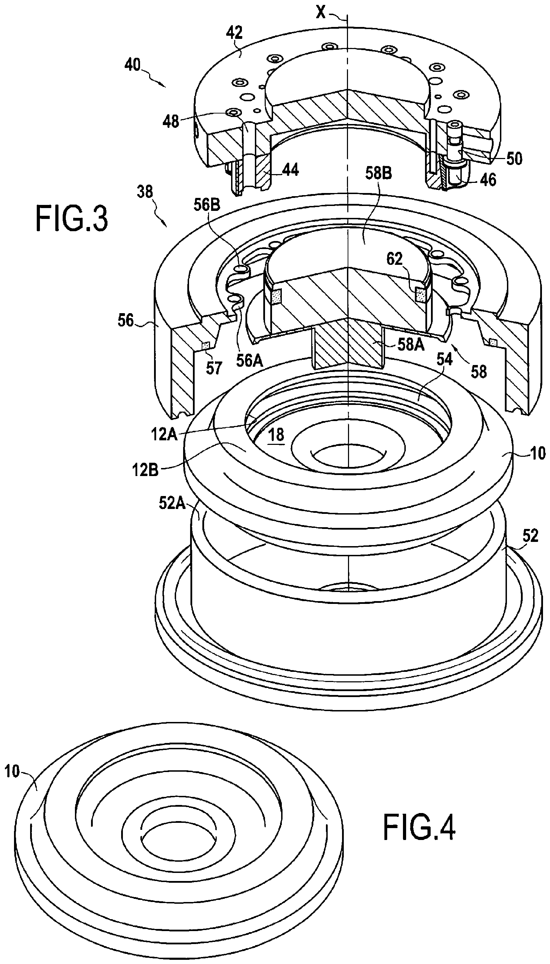

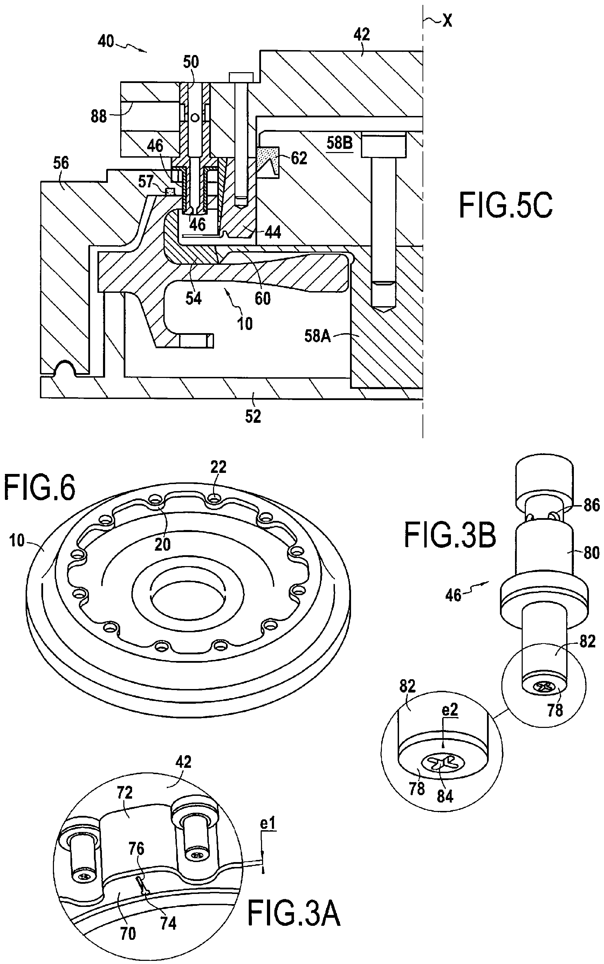

Ce principe d'usinage est utilisé par un outillage fixe 38, conforme à l'invention, qui est illustré sous forme éclatée à la figure 3. Cet outillage qui est agencé de manière axisymétrique autour de l'axe central du disque 10 permet d'usiner en une seule opération à la fois les festons 20 et les trous de fixation 22 d'une bride de disque. Un outil d'enfonçage 40 qui sera détaillé plus avant et qui comporte un corps en matériau isolant 42 de préférence cylindrique d'où émerge un ensemble de cathodes d'enfonçage 44, 46 capables d'usiner successivement en deux étapes distinctes les festons et les trous de fixation, est représenté disposé au-dessus du disque 10 et est configuré pour pouvoir se déplacer par rapport à ce dernier, selon l'axe central du disque. Les cathodes et/ou l'outil d'enfonçage sont traversés de passages axiaux d'injection de fluide respectifs 48, 50 par lesquels l'outillage est alimenté en électrolyte. L'amenée de courant distinct pour les cathodes d'enfonçage 44 et 46 est assurée par des liaisons à vis (non représentées) permettant aussi de fixer ces cathodes au corps isolant.

L'outillage 38 destiné à recevoir cet outil d'enfonçage 40 est composé quant à lui d'un plateau support 52 en forme d'anneau calibré en hauteur, d'un protecteur « inférieur » 54, d'un protecteur « supérieur » 56 et d'un verrou de bridage 58. Les notions de supérieur et inférieur sont à considérer par rapport au sens d'usinage de l'outil d'enfonçage selon l'axe central du disque qui en se déplaçant va d'abord rencontrer le protecteur supérieur 56 puis le disque à usiner 10 et enfin le protecteur inférieur 54.

Le plateau support annulaire 52 est destiné à recevoir la pièce à usiner et à servir d'appui de référence pour cette pièce. Plus précisément, c'est la partie d'extrémité 16 destinée à former les alvéoles du disque qui est mise en appui sur un rebord calibré en hauteur 52A de l'anneau dans l'exemple illustré (toutefois une mise en appui sur au moins trois plots calibrés, de préférence six, régulièrement répartis est aussi envisageable).

Le protecteur inférieur 54 est une pièce conductrice rigide, en forme de bague à rebord courbe, également agencée de manière axisymétrique autour de l'axe central du disque et en contact direct (c'est-à-dire au même potentiel que la pièce à usiner) avec une surface inférieure 12A de la bride à usiner dont elle épouse la forme en partie (le rebord de cette bague, ne s'étend pas jusqu'à couvrir les festons de la bride une fois celle-ci usinée). Elle est conçue en plusieurs parties (au moins deux parties et préférentiellement quatre) pour faciliter son insertion sous la bride du disque. La forme et le positionnement de ce protecteur inférieur sont configurés pour assurer le passage des cathodes sans risques d'un contact avec celles-ci (un jeu radial d'environ 0,2 mm est ainsi approprié). Pour masquer les surfaces qui pourraient être en contact avec l'électrolyte souillé et protéger efficacement des attaques électrolytiques toutes les surfaces situées sous la bride sur lequel l'électrolyte pourrait ruisseler, cette pièce conductrice est insérée entre le poireau d'équilibrage 18 et la bride supérieure 12 du disque. Par ce protecteur galvanique, les surfaces nues aux abords du protecteur ne subissent pas d'attaques électrolytiques qui risqueraient d'endommager la pièce.

Le protecteur supérieur 56 est une pièce conductrice rigide, en forme de capot, également agencée de manière axisymétrique autour de l'axe central du disque et en contact direct (c'est-à-dire au même potentiel que la pièce à usiner) avec une surface supérieure 12B de la bride à usiner, sa périphérie possédant toutefois des festons 56A et des trous 56B dont les formes et dimensions correspondent à ceux de la bride à usiner. La forme et le positionnement de ce protecteur sont configurés pour assurer le passage des cathodes sans risques d'un contact avec celles-ci (un jeu radial maximal de 0,5 mm est approprié pour les trous et d'environ 0,2 mm pour les festons pour éviter un contact direct avec les cathodes). Comme précédemment, par ce protecteur galvanique, les surfaces nues aux abords de cette pièce conductrice ne subissent pas d'attaques électrolytiques non contrôlées qui sinon risqueraient d'endommager la pièce. En outre, un premier joint circulaire 57 monté dans le protecteur supérieur à la jonction avec la surface supérieure 12B de la bride permet d'assurer une étanchéité à l'électrolyte lors de l'enfonçage des cathodes.

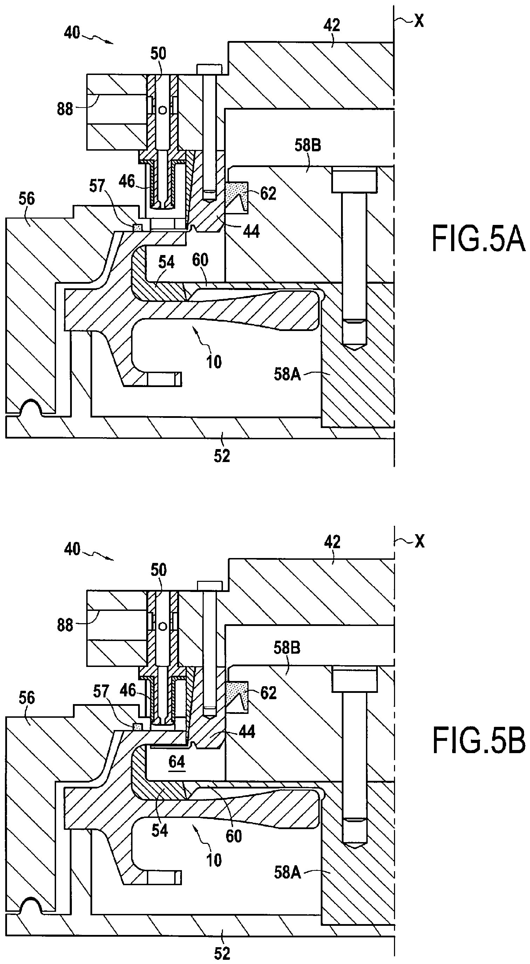

Le verrou de bridage 58 est de préférence composé en deux parties fixées ensemble (par vissage comme illustré aux figures 5A à 5C ou tout autre moyen équivalent) après leur mise en position sur le disque, afin de faciliter son installation et sa fixation. Ce verrou comporte une partie inférieure 58A faisant office de centreur qui est calibrée sur le diamètre intérieur du poireau d'équilibrage 18 de façon à centrer axialement le disque 10. Cette partie inférieure comporte également une jante 60 de bridage du disque avec le protecteur inférieur 54 préalablement en position et maintenu sous la surface inférieure de cette jante. Une partie supérieure en matériau isolant 58B du verrou de bridage permet d'assurer une étanchéité à l'électrolyte par un second joint circulaire 62, de type joint à lèvre, lors de l'enfonçage des cathodes, de façon à créer une chambre de travail close 64 dans laquelle l'électrolyte souillé va alors venir s'accumuler temporairement avant de ressortir de l'outillage autour des cathodes par effet de contre-pression.

Les figures 3A et 3B montrent des détails des première et deuxième cathodes de l'outil d'enfonçage 40.

La première cathode 44 présente la forme d'une couronne annulaire conductrice comportant à son extrémité terminale une partie travaillante d'une épaisseur e1 comprise entre 0,2 et 1 mm (de préférence inférieur à 0,7 mm pour éviter des effets de conicité sur les formes usinées) et dont la périphérie extérieure est formée par une pluralité de saillies radiales d'usinage 70 de forme complémentaire de celles des festons 20 à usiner. A cette périphérie extérieure est disposée une partie isolante 72 de même forme (ce matériau isolant devant bien entendu être compatible avec l'électrolyte) en contact axialement avec le corps isolant cylindrique 42 et dont la hauteur définit la position selon l'axe du disque de cette première cathode 44. La couronne conductrice et le corps isolant cylindrique sont percés par les passages d'injection de l'électrolyte 48 (voir la figure 3) qui débouchent dans une ouverture terminale 74 dont une fente 76 y aboutissant, tous deux pratiqués dans chacune des saillies radiales d'usinage et permettant la diffusion de l'électrolyte. La fixation de la couronne dans le corps isolant cylindrique 42 est réalisée par exemple au moyen de vis (voir les figures 5A à 5C).

La deuxième cathode 46 est constituée par une pluralité de buses axiales d'usinage disposée à l'extérieur de la première électrode (par rapport à l'axe central du disque) sur une même ligne circonférentielle. Chaque buse illustrée à la figure 3B présente à son extrémité terminale une partie travaillante en forme de plaque conductrice cylindrique 78 d'une épaisseur e2 comprise entre 0,2 et 1 mm (de préférence inférieur à 0,3 mm pour éviter des effets de conicité sur les formes usinées) et dont le diamètre correspond à celui des trous 22 à usiner. Cette plaque conductrice constitue l'extrémité du corps cylindrique conducteur 80 de chaque buse recouvert d'une partie isolante 82 de même forme (ce matériau isolant devant bien entendu être compatible avec l'électrolyte) et dont la hauteur est au moins égale à celle additionnée du protecteur supérieur et des trous à usiner. Le corps cylindrique conducteur est percé par le passage d'injection de l'électrolyte 50 qui débouche dans un orifice par exemple en croix 84 pratiqué dans la plaque conductrice 78 et permettant la diffusion de l'électrolyte. Des orifices radiaux 86 traversant ces buses et disposés sensiblement dans le prolongement de passages radiaux 88 du corps isolant cylindrique 42 de l'outil d'enfonçage, sont prévus pour la distribution de l'électrolyte dans les cathodes de perçage. La fixation des buses dans le corps isolant cylindrique 42 est réalisée dans l'axe de la buse, par exemple au moyen de vis (non représentées).

Par conséquent, lorsque les festons ou les trous de fixation sont en cours d'usinage, les première et deuxième cathodes sont alimentées successivement en électrolyte depuis les passages d'injection 48 et 88 pratiqués dans le corps isolant 42 de l'outil d'enfonçage 40 et via les orifices de diffusion 74, 76 et 84 à l'extrémité axiale de ces cathodes. L'électrolyte peut alors ruisseler autour des saillies et à l'extrémité des buses, avant d'être évacué par simple effet de contre-pression. Les protecteurs inférieur et supérieur permettent de protéger les portions de festons ou de trous de fixation venant d'être usinées par une attaque préférentielle de l'électrolyte souillé sur les protecteurs conducteurs avec une conductivité plus faible que le matériau de la pièce à usiner et ainsi éviter des attaques électrolytiques non contrôlées de ces portions non usinées, préservant par conséquent la qualité de l'usinage.

L'usinage d'une bride du disque qui est maintenant illustré en regard des figures 4 à 6 se passe de la manière suivante, la figure 4 illustrant la pièce brute avant usinage et la figure 6 la pièce finie après usinage.

Le disque 10 à usiner tel qu'illustré à la figure 4 est d'abord placé sur le plateau support annulaire 52. Il est ensuite protégé (c'est-à-dire les parties de la bride autres que celles devant être usinées) de l'électrolyte à la fois intérieurement par la mise en place du protecteur inférieur 54 qui est maintenu en position par la jante 60 de la partie inférieure 58A du verrou de bridage 58 centré sur le poireau 18 et extérieurement par la mise en place du protecteur supérieur 56. La partie supérieure 58B du verrou de bridage vient achever le montage de l'outillage 38 qui est alors prêt à recevoir l'outil d'enfonçage 40 qui viendra entourer la partie supérieure 58B de ce verrou de bridage et ainsi le refermer, préférentiellement de façon étanche compte tenu de la présence des joints circulaires 57, 62, à la façon d'un couvercle.

Initialement (figure 5A), cet outil d'enfonçage 40 est placé dans l'outillage 38 de telle sorte que la première cathode 44 soit au voisinage de la surface supérieure 12B de la bride de disque (sensiblement en dessous du joint circulaire 62). Pour ce faire, cette première cathode 44 est placée à une distance de 0,01 à 0,2 mm au-dessus de cette surface supérieure, selon l'axe central du disque. La seconde cathode 46 se trouve alors positionnée en retrait de cette surface supérieure comme de celle du protecteur supérieur, à une distance axiale bien éloignée des trous de fixation 22.

La phase d'usinage des festons 20 peut alors débuter en commandant le déplacement relatif selon l'axe central du disque de l'outil d'enfonçage 40 par rapport au disque 10 maintenu fixement dans l'outillage 38, la première cathode 44 étant simultanément alimentée en courant et en électrolyte par tout moyen connu approprié par assurer l'usinage électrochimique des festons pendant la descente de l'outil. La pression d'électrolyte est avantageusement comprise entre 2 et 10 bars et la densité de courant comprise entre 50A/cm2 et 300A/cm2. Le déplacement de l'outil d'enfonçage est quant à lui obtenu par tout moyen connu approprié avec une vitesse d'enfonçage comprise entre 0,15 mm et 0,5 mm/minute. Cet usinage des festons est terminé lorsque la première cathode a dépassé par en dessous la surface inférieure 12A de la bride de disque (figure 5B). L'alimentation de la première cathode en électrolyte et en courant est alors coupée.

Dans cette position de fin d'usinage de la première cathode, la seconde cathode 46 se trouve alors positionnée dans les parties rentrantes des festons 56A du protecteur supérieur à une distance de 0,01 à 0,2 mm au-dessus de la surface supérieure 12B de la bride de disque, selon l'axe central de ce disque, de telle sorte qu'elle se retrouve directement positionnée au voisinage des trous de fixation 22 pour permettre l'engagement de la phase d'usinage de ces trous 22.

Dans cette seconde phase, c'est la deuxième cathode 46 qui est alimentée à son tour en courant et en électrolyte, de sorte que l'usinage électrochimique de ces trous 22 puisse s'effectuer immédiatement ou non (un temps de pause est de préférence prévu pour effectuer le basculement de l'alimentation en courant). La commande du déplacement de l'outil d'enfonçage selon l'axe central du disque ne s'est quant à lui pas interrompu même si une telle interruption est bien entendue envisageable par exemple si à l'issue de cette première phase d'usinage il est procédé à une régénération de l'électrolyte. L'usinage des trous est terminé lorsque la seconde cathode a dépassé par en-dessous la surface inférieure 12A de la bride de disque (figure 5C). L'alimentation de la seconde cathode en électrolyte et en courant est alors coupée, de même que la commande du déplacement de l'outil d'enfonçage. L'usinage de la bride du disque est ainsi terminé et se présente telle qu'illustrée à la figure 6 avec sa succession de festons 20 et de trous de fixation 22.

Lorsque le disque 10 présente une configuration symétrique par rapport au poireau d'équilibrage 18 comme illustré, il suffit de retourner le disque pour usiner la seconde bride (ce retournement a déjà été effectué sur les figures présentées qui montrent l'usinage de cette seconde bride). Lorsque cette symétrie n'existe pas, il convient de prévoir des protecteurs inférieur et supérieur adaptés à la forme de bride à usiner et d'adapter les dimensions de l'outil en conséquence, c'est-à-dire en pratique la position des cathodes par rapport à l'axe central du disque.

On notera, que si nécessaire, un rayonnage en entrée et en sortie des festons 20 peut être assuré par une réduction de vitesse avec un temps d'usinage statique de quelques secondes en fonction de la valeur de rayon désiré. Sans réduction de vitesse, il est aussi possible de prévoir un espacement axial de quelques dixièmes de millimètres (de préférence compris entre 0,2 mm et 0,8 mm et typiquement 0,5 mm) entre le protecteur supérieur 56 et la face supérieure de la bride 12B, pour l'obtention des rayonnages en entrée des festons ainsi que des chanfreins en entrée des trous de fixation 22.

Bien que la présente invention ait été décrite en se référant à l'usinage de la bride d'un disque de turbine, il est évident que des modifications et des changements peuvent être effectués sans sortir de la portée générale de l'invention telle que définie par les revendications. Par exemple, l'outil d'enfonçage peut bien entendu être adapté en modifiant le positionnement respectif en hauteur des deux cathodes pour réaliser les trous avant les festons et non l'inverse. De même, le protecteur inférieur peut comme le protecteur supérieur comporter des festons et des trous pour épouser au mieux la forme de la bride. Pareillement, si l'on a décrit le maintien de l'électrolyte souillé dans une chambre close pendant toute la durée de l'usinage, il est évident qu'un circuit fermé de circulation de l'électrolyte permettant son admission et son évacuation de cette chambre peut aussi être envisagé sans difficulté particulière par l'homme du métier. Par conséquent, la description et les dessins doivent être considérés dans un sens illustratif plutôt que restrictif.

## Revendications

1. Outillage (38) pour réaliser des festons et des trous de fixation d'une bride (12, 14) d'un disque (10) par usinage électrochimique utilisant un électrolyte, l'outillage comprenant : un plateau support annulaire (52) pour recevoir ledit disque ; des protecteurs inférieur (54) et supérieur (56) configurés pour protéger ledit disque de projections de l'électrolyte ; un verrou de bridage (58A, 58B) pour maintenir ledit disque en position durant l'usinage ; et un outil d'enfonçage (40) comprenant dans un corps isolant (42) sensiblement cylindrique une première (44) et une deuxième (46) cathodes conductrices coaxiales, lesdites première et deuxième cathodes étant fixées de manière rigide l'une à l'autre, **caractérisé en ce que** la première cathode (44) de forme annulaire comporte à une périphérie extérieure une pluralité de saillies radiales d'usinage (70) de forme complémentaire à celle des festons à usiner (20) et la deuxième cathode (46) comporte, sur une même circonférence extérieure à la première cathode par rapport à l'axe central du disque, une pluralité de buses axiales d'usinage (80) de forme semblable à celle des trous de fixation à usiner (22).

2. Outillage pour réaliser des festons et des trous de fixation d'une bride d'un disque par usinage électrochimique selon la revendication 1, dans lequel ladite pluralité de saillies radiales d'usinage présente à une extrémité terminale une partie travaillante d'une épaisseur e1 comprise entre 0,2 et 1 mm, et chacune desdites buses axiales d'usinage présente à une extrémité terminale une partie travaillante en forme de plaque conductrice cylindrique (78) d'une épaisseur e2 comprise entre 0,2 et 1 mm, et dans lequel, pour permettre la diffusion de l'électrolyte, chacune des saillies radiales d'usinage (70) comporte une ouverture terminale (74) et la plaque conductrice (78) comporte un orifice (84).

3. Outillage pour réaliser des festons et des trous de fixation d'une bride d'un disque par usinage électrochimique selon la revendication 1 ou 2, dans lequel le corps isolant (42) de l'outil d'enfonçage comporte en outre des passages d'injection de fluide (48, 88) pour injecter l'électrolyte au travers des saillies radiales d'usinage (70) et des buses axiales d'usinage (80).

4. Outillage pour réaliser des festons et des trous de fixation d'une bride d'un disque par usinage électrochimique selon l'une quelconque des revendications 1 à 3, dans lequel les protecteurs inférieur (54) et supérieur (56) sont constitués chacun par une pièce conductrice rigide en contact direct avec une surface (12A, 12B) de la bride de disque à usiner et spécialement configurée pour assurer le passage des première et deuxième cathodes sans risques d'un contact avec celles-ci et dans lequel le protecteur inférieur (54) est formé en plusieurs parties pour permettre son insertion sous la bride à usiner.

5. Outillage pour réaliser des festons et des trous de fixation d'une bride d'un disque par usinage électrochimique selon l'une quelconque des revendications 1 à 4, dans lequel, pour permettre l'obtention de rayonnages en entrée des festons (20) ainsi que des chanfreins en entrée des trous de fixation (22), un espacement axial compris entre 0,2 mm et 0,8 mm, et typiquement 0,5 mm, est prévu entre le protecteur supérieur (56) et une face supérieure (12B) de la bride de disque.

6. Outillage pour réaliser des festons et des trous de fixation d'une bride d'un disque par usinage électrochimique selon l'une quelconque des revendications 1 à 5, dans lequel le verrou de bridage comporte une partie inférieure (58A) calibrée sur un diamètre intérieur d'un poireau d'équilibrage (18) du disque de façon à assurer un centrage axial de ce disque, cette partie inférieure comportant en outre une jante (60) de bridage du disque avec le protecteur inférieur (54) préalablement en position.

7. Outillage pour réaliser des festons et des trous de fixation d'une bride d'un disque par usinage électrochimique selon l'une quelconque des revendications 1 à 6, comprenant en outre deux joints d'étanchéité annulaires (57, 62) montés d'une part entre le protecteur supérieur (56) et une bride de disque supérieure (12) et d'autre part entre une partie supérieure (58B) du verrou de bridage et l'outil d'enfonçage (40) et permettant d'assurer une étanchéité à l'électrolyte lors de l'enfonçage des première et deuxième cathodes.

8. Procédé de réalisation de festons et de trous de fixation d'une bride de disque par usinage électrochimique au moyen d'un outil d'enfonçage (40) comprenant dans un corps isolant sensiblement cylindrique (42) des première et deuxième cathodes conductrices (44, 46) coaxiales, le procédé comportant les étapes suivantes :
a) Positionner l'outil d'enfonçage (40) de telle sorte que la première cathode (44) soit au voisinage d'une surface supérieure (12B) de la bride de disque à usiner.
b) Usiner avec la première cathode (44) les festons (20) de la bride (12, 14) de disque par usinage électrochimique en déplaçant l'outil d'enfonçage (40) par rapport au disque selon l'axe central du corps isolant sensiblement cylindrique jusqu'à ce que la deuxième cathode (46) de l'outil d'enfonçage soit positionnée au voisinage d'une surface supérieure (12B) de ladite bride de disque à usiner.
c) Usiner avec la deuxième cathode (46) les trous (22) de la bride (12, 14) de disque par usinage électrochimique en déplaçant l'outil d'enfonçage (40) par rapport au disque selon l'axe central du corps isolant (42) sensiblement cylindrique.

9. Procédé de réalisation de festons et de trous de fixation d'une bride de disque par usinage électrochimique au moyen d'un outil d'enfonçage (40) comprenant dans un corps isolant sensiblement cylindrique (42) une première et une deuxième cathodes conductrices (44, 46) coaxiales, le procédé comportant les étapes suivantes :
a) Positionner l'outil d'enfonçage (40) de telle sorte que la deuxième cathode (46) soit au voisinage d'une surface supérieure (12B) de la bride de disque à usiner.
b) Usiner avec la deuxième cathode (46) les trous (22) de la bride de disque par usinage électrochimique en déplaçant l'outil d'enfonçage par rapport au disque selon l'axe central du corps isolant sensiblement cylindrique jusqu'à ce que la première cathode (44) de l'outil d'enfonçage soit positionnée au voisinage d'une surface supérieure (12B) de ladite bride de disque à usiner.
c) Usiner avec la première cathode (44) les festons (20) de la bride de disque par usinage électrochimique en déplaçant l'outil d'enfonçage par rapport au disque selon l'axe central du corps isolant (42) sensiblement cylindrique.

10. Procédé de réalisation de festons et de trous de fixation d'une bride de disque par usinage électrochimique selon la revendication 8 ou 9, dans lequel on protège les surfaces inférieure et supérieure de la bride de disque, autres que celles concernées par le procédé, par respectivement des protecteurs inférieur (52) et supérieur (54) constitués chacun par une pièce conductrice rigide en contact direct avec les surfaces à protéger et en un matériau de meilleure conductivité que le matériau de la bride de disque à usiner.

## Patentansprüche

1. Werkzeug (38) zum Herstellen von Girlanden und Befestigungslöchern eines Flansches (12, 14) einer Scheibe (10) durch elektrochemische Bearbeitung unter Verwendung eines Elektrolyten, wobei das Werkzeug umfasst: eine ringförmige Stützplatte (52) zum Aufnehmen der Scheibe, eine untere (54) und eine obere (56) Schutzvorrichtung, die dazu ausgestaltet sind, die Scheibe vor Spritzern des Elektrolyten zu schützen, einen Anflanschriegel (58A, 58B) zum Halten der Scheibe an ihrer Position während der Bearbeitung, und ein Einsenkwerkzeug (40), das in einem im Wesentlichen zylindrischen isolierenden Körper (42) eine erste (44) und eine zweite (46) leitfähige Kathode umfasst, die koaxial sind, wobei die erste und die zweite Kathode auf starre Weise aneinander befestigt sind, **dadurch gekennzeichnet, dass** die erste Kathode (44), die eine Ringform aufweist, an einem äußeren Umfang mehrere radiale Bearbeitungsvorsprünge (70) beinhaltet, deren Form ergänzend zu derjenigen der zu bearbeitenden Girlanden (20) ist, und die zweite Kathode (46) auf einem selben Umkreis außerhalb der ersten Kathode in Bezug auf die Mittelachse der Scheibe mehrere axiale Bearbeitungsdüsen (80) beinhaltet, deren Form derjenigen der zu bearbeiteten Befestigungslöcher (22) ähnlich ist.

2. Werkzeug zum Herstellen von Girlanden und Befestigungslöchern eines Flansches einer Scheibe durch elektrochemische Bearbeitung nach Anspruch 1, wobei die mehreren radialen Bearbeitungsvorsprünge an einem abschließenden Ende einen Arbeitsteil mit einer Dicke e1 von zwischen 0,2 und 1 mm umfassen, und jede der axialen Bearbeitungsdüsen an einem abschließenden Ende einen Arbeitsteil mit der Form einer leitfähigen zylindrischen Platte (78) mit einer Dicke e2 von zwischen 0,2 und 1 mm aufweist, und wobei zum Erlauben der Ausbreitung des Elektrolyten jeder der radialen Bearbeitungsvorsprünge (70) eine abschließende Öffnung (74) beinhaltet und die leitfähige Platte (78) eine Mündung (84) beinhaltet.

3. Werkzeug zum Herstellen von Girlanden und Befestigungslöchern eines Flansches einer Scheibe durch elektrochemische Bearbeitung nach Anspruch 1 oder 2, wobei der isolierende Körper (42) des Einsenkwerkzeugs ferner Fluideinspritzkanäle (48, 88) zum Einspritzen des Elektrolyten durch radiale Bearbeitungsvorsprünge (70) und axiale Bearbeitungsdüsen (80) beinhaltet.

4. Werkzeug zum Herstellen von Girlanden und Befestigungslöchern eines Flansches einer Scheibe durch elektrochemische Bearbeitung nach einem der Ansprüche 1 bis 3, wobei die untere (54) und die obere (56) Schutzvorrichtung jeweils aus einem starren, leitfähigen Teil bestehen, das sich in direktem Kontakt mit einer Oberfläche (12A, 12B) des zu bearbeitenden Scheibenflansches befindet und eigens dazu ausgestaltet ist, den Durchgang der ersten und der zweiten Kathode ohne Gefahr eines Kontakts mit diesen zu gewährleisten, und wobei die untere Schutzvorrichtung (54) in mehreren Teilen gebildet ist, um ihr Einsetzen unter dem zu bearbeitenden Flansch zu erlauben.

5. Werkzeug zum Herstellen von Girlanden und Befestigungslöchern eines Flansches einer Scheibe durch elektrochemische Bearbeitung nach einem der Ansprüche 1 bis 4, wobei, um das Erhalten von Furchen an dem Eingang der Girlanden (20) sowie von Abfasungen an dem Eingang der Befestigungslöcher zu erlauben, ein axialer Zwischenraum von zwischen 0,2 mm und 0,8 mm und typischerweise 0,5 mm zwischen der oberen Schutzvorrichtung (56) und einer Oberseite (12B) des Scheibenflansches vorgesehen ist.

6. Werkzeug zum Herstellen von Girlanden und Befestigungslöchern eines Flansches einer Scheibe durch elektrochemische Bearbeitung nach einem der Ansprüche 1 bis 5, wobei der Anflanschriegel einen unteren Teil (58A) beinhaltet, der derart auf einen Innendurchmesser eines Ausgleichslöffels (18) der Scheibe kalibriert ist, dass eine axiale Zentrierung dieser Scheibe gewährleistet wird, wobei dieser untere Teil ferner eine Felge (60) zum vorherigen Anflanschen der Scheibe mit der unteren Schutzvorrichtung (54) an der Position beinhaltet.

7. Werkzeug zum Herstellen von Girlanden und Befestigungslöchern eines Flansches einer Scheibe durch elektrochemische Bearbeitung nach einem der Ansprüche 1 bis 6, das ferner zwei ringförmige Dichtungen (57, 62) umfasst, die einerseits zwischen der oberen Schutzvorrichtung (56) und einem oberen Scheibenflansch (12) und andererseits zwischen einem oberen Teil (58B) des Anflanschriegels und dem Einsenkwerkzeug (40) montiert sind und das Gewährleisten einer Dichte gegenüber dem Elektrolyten beim Einsenken der ersten und der zweiten Kathode erlauben.

8. Verfahren zur Herstellung von Girlanden und Befestigungslöchern eines Scheibenflansches durch elektrochemische Bearbeitung mittels eines Einsenkwerkzeugs (40), das in einem im Wesentlichen zylindrischen isolierenden Körper (42) eine erste und eine zweite leitfähige Kathode (44, 46) umfasst, die koaxial sind, wobei das Verfahren die folgenden Schritte beinhaltet:
a) Positionieren des Einsenkwerkzeugs (40), derart dass die erste Kathode (44) sich in der Nachbarschaft einer oberen Oberfläche (12B) des zu bearbeitenden Scheibenflansches befindet,
b) Bearbeiten der Girlanden (20) des Scheibenflansches (12, 14) durch elektrochemische Bearbeitung mit der ersten Kathode (44) bei Verlagern des Einsenkwerkzeugs (40) in Bezug auf die Scheibe entlang der Mittelachse des im Wesentlichen zylindrischen isolierenden Körpers, bis die zweite Kathode (46) des Einsenkwerkzeugs in der Nachbarschaft einer oberen Oberfläche (12B) des zu bearbeitenden Scheibenflansches positioniert ist,
c) Bearbeiten der Löcher (22) des Scheibenflansches (12, 14) durch elektrochemische Bearbeitung mit der zweiten Kathode (46) bei Verlagern des Einsenkwerkzeugs (40) in Bezug auf die Scheibe entlang der Mittelachse des im Wesentlichen zylindrischen isolierenden Körpers (42).

9. Verfahren zur Herstellung von Girlanden und Befestigungslöchern eines Scheibenflansches durch elektrochemische Bearbeitung mittels eines Einsenkwerkzeugs (40), das in einem im Wesentlichen zylindrischen isolierenden Körper (42) eine erste und eine zweite leitfähige Kathode (44, 46) umfasst, die koaxial sind, wobei das Verfahren die folgenden Schritte beinhaltet:
a) Positionieren des Einsenkwerkzeugs (40), derart dass die zweite Kathode (46) sich in der Nachbarschaft einer oberen Oberfläche (12B) des zu bearbeitenden Scheibenflansches befindet,
b) Bearbeiten der Löcher (22) des Scheibenflansches durch elektrochemische Bearbeitung mit der zweiten Kathode (46) bei Verlagern des Einsenkwerkzeugs in Bezug auf die Scheibe entlang der Mittelachse des im Wesentlichen zylindrischen isolierenden Körpers, bis die erste Kathode (44) des Einsenkwerkzeugs in der Nachbarschaft einer oberen Oberfläche (12B) des zu bearbeitenden Scheibenflansches positioniert ist,
c) Bearbeiten der Girlanden (20) des Scheibenflansches durch elektrochemische Bearbeitung mit der ersten Kathode (44) bei Verlagern des Einsenkwerkzeugs in Bezug auf die Scheibe entlang der Mittelachse des im Wesentlichen zylindrischen isolierenden Körpers (42).

10. Verfahren zur Herstellung von Girlanden und Befestigungslöchern eines Scheibenflansches durch elektrochemische Bearbeitung nach Anspruch 8 oder 9, wobei die untere und die obere Oberfläche des Scheibenflansches außer denjenigen, die von dem Verfahren betroffen sind, durch eine untere (52) beziehungsweise eine obere Schutzvorrichtung (54) geschützt werden, die jeweils aus einem starren, leitfähigen Teil, das sich in direktem Kontakt mit den zu schützenden Oberflächen befindet, und aus einem Material mit besserer Leitfähigkeit als das Material des zu bearbeitenden Scheibenflansches bestehen.

## Claims

1. A tooling (38) for producing scallops and fastening holes of a clamp (12, 14) of a disc (10) by electrochemical machining using an electrolyte, the tooling comprising: an annular support tray (52) to receive said disc; lower (54) and upper (56) shields configured to protect said disc from splashes of the electrolyte; a clamping lock (58A, 58B) to hold said disc in position during the machining; and a die-sinking tool (40) comprising in a substantially cylindrical insulating body (42) a first (44) and a second (46) coaxial conductive cathode, said first and second cathodes being rigidly fastened to each other, **characterized in that** the first annular cathode (44) includes at an external periphery a plurality of radial machining protrusions (70) of a shape complementary to that of the scallops to be machined (20) and the second cathode (46) includes, on the same circumference external to the first cathode relative to the central axis of the disc, a plurality of axial machining nozzles (80) of a shape similar to that of the fastening holes to be machined (22).

2. The tooling for producing scallops and fastening holes of a clamp of a disc by electrochemical machining according to claim 1, wherein said plurality of radial machining protrusions has at one terminal end a working portion of a thickness e1 comprised between 0.2 and 1 mm, and each of said axial machining nozzles has at one terminal end a working portion in the form of a cylindrical conductive plate (78) of a thickness e2 comprised between 0.2 and 1 mm, and wherein, to allow the diffusion of the electrolyte, each of the radial machining protrusions (70) includes a terminal aperture (74) and the conductive plate (78) includes an orifice (84).

3. The tooling for producing scallops and fastening holes of a clamp of a disc by electrochemical machining according to claim 1 or 2, wherein the insulating body (42) of the die-sinking tool further includes fluid injection passages (48, 88) for injecting the electrolyte through the radial machining protrusions (70) and the axial machining nozzles (80).

4. The tooling for producing scallops and fastening holes of a clamp of a disc by electrochemical machining according to any one of claims 1 to 3, wherein the lower (54) and upper (56) shields each consist of a rigid conductive part in direct contact with a surface (12A, 12B) of the disc clamp to be machined and specially configured to ensure the passage of the first and second cathodes without risks of contact therewith and wherein the lower shield (54) is formed in several portions to allow its insertion under the clamp to be machined.

5. The tooling for producing scallops and fastening holes of a clamp of a disc by electrochemical machining according to any one of claims 1 to 4, wherein, in order to obtain radiusing at the inlet of the scallops (20) as well as chamfers at the inlet of the fastening holes (22), an axial spacing comprised between 0.2 mm and 0.8 mm, and typically 0.5 mm, is provided between the upper shield (56) and an upper face (12B) of the disc clamp.

6. The tooling for producing scallops and fastening holes of a clamp of a disc by electrochemical machining according to any one of claims 1 to 5, wherein the clamping lock includes a lower portion (58A) calibrated on a internal diameter of a balancing element (18) of the disc so as to ensure an axial centering of this disc, this lower portion further including a rim (60) for clamping the disc with the lower shield (54) previously in position.

7. The tooling for producing scallops and fastening holes of a clamp of a disc by electrochemical machining according to any one of claims 1 to 6, further comprising two annular seals (57, 62) mounted, on the one hand, between the upper shield (56) and an upper disc clamp (12) and, on the other hand, between an upper portion (58B) of the clamping lock and the die-sinking tool (40) and allowing ensuring an electrolyte sealing during the die-sinking of the first and second cathodes.

8. A method for producing scallops and fastening holes of a disc clamp by electrochemical machining by means of a die-sinking tool (40) comprising in a substantially cylindrical insulating body (42) first and second coaxial conductive cathodes (44, 46), the method including the following steps:
a) Positioning the die-sinking tool (40) so that the first cathode (44) is in the vicinity of an upper surface (12B) of the disc clamp to be machined.
b) Machining with the first cathode (44) the scallops (20) of the disc clamp (12, 14) by electrochemical machining by moving the die-sinking tool (40) relative to the disc along the central axis of the substantially cylindrical insulating body until the second cathode (46) of the die-sinking tool is positioned in the vicinity of an upper surface (12B) of said disc clamp to be machined.
c) Machining with the second cathode (46) the holes (22) of the disc clamp (12, 14) by electrochemical machining by moving the die-sinking tool (40) relative to the disc along the central axis of the substantially cylindrical insulating body (42).

9. A method for producing scallops and fastening holes of a disc clamp by electrochemical machining by means of a die-sinking tool (40) comprising in a substantially cylindrical insulating body (42) a first and a second coaxial conductive cathode (44, 46), the method including the following steps:
a) Positioning the die-sinking tool (40) so that the second cathode (46) is in the vicinity of an upper surface (12B) of the disc clamp to be machined.
b) Machining with the second cathode (46) the holes (22) of the disc clamp by electrochemical machining by moving the die-sinking tool relative to the disc along the central axis of the substantially cylindrical insulating body until the first cathode (44) of the die-sinking tool is positioned in the vicinity of an upper surface (12B) of said disc clamp to be machined.
c) Machining with the first cathode (44) the scallops (20) of the disc clamp by electrochemical machining by moving the die-sinking tool relative to the disc along the central axis of the substantially cylindrical insulating body (42).

10. The method for producing scallops and fastening holes of a disc clamp by electrochemical machining according to claim 8 or 9, wherein the lower and upper surfaces of the disc clamp, other than those involved in the method, are protected by respectively lower (52) and upper (54) shields each consisting of a rigid conductive part in direct contact with the surfaces to be protected and made of a material with better conductivity than the material of the disc clamp to be machined.
